# EUROPEAN PATENT SPECIFICATION

(11) **EP 2 860 392 B1**
(45) Date of publication and mention of the grant of the patent: **07.03.2018**
(21) Application number: 13187917.3
(22) Date of filing: 09.10.2013
(51) Int. Cl.: F03D 7/02

(54) **Method for adjusting the yaw angle of a wind turbine relative to a given wind direction**
Verfahren zur Einstellung des Windwinkels einer Windturbine in Bezug auf eine gegebene Windrichtung
Procédé de réglage de l'angle de lacet d'une éolienne par rapport à une direction de vent donnée

(43) Date of publication of application: 15.04.2015
(73) Proprietor: Siemens Aktiengesellschaft, 80333 München (DE)
(72) Inventor: Egedal, Per, 7400 Herning (DK); Krogsgaard, Mads, 7100 Vejle (DK)

(56) References cited:
- EP-A1- 2 017 468
- EP-A1- 2 267 301
- EP-A1- 2 653 721
- EP-A1- 2 653 722
- WO-A1-2012/158131

## Description

The invention relates to a method for adjusting the yaw angle of a wind turbine relative to a given wind direction.

In the field of wind turbine constructions, it is known that hubs having a number of rotor blades attached thereto are rotatably mounted on the nacelle relative to a horizontal axis. In front of the hub, a spinner can be mounted. The nacelle is mounted to a tower construction of the wind turbine by means of a yaw drive. The yaw drive allows for a rotation or "yawing" of the nacelle relative to a vertical axis.

The energy output of a wind turbine essentially depends on the orientation/position of the hub relative to the wind direction. In other words, the nacelle should be orientated/positioned in such a manner that it directly faces the wind. This orientation/position of the nacelle is given when the centre or symmetrical axis of the nacelle coincides with the wind direction. This orientation/position of the nacelle is called the zero wind direction.

Deviations of the orientation/position of the nacelle from this zero wind direction are denoted as "yaw errors". Hence, these yaw errors occur when the nacelle does not directly face the wind. Respective yaw errors lead to a reduction in energy output and turbine efficiency. Furthermore, yaw errors usually give rise to uneven mechanical loading of diverse components of the wind turbine resulting in an increase of fatigue load.

Known technical approaches for adjusting the yaw angle of a wind turbine relative to a given wind direction particularly are based on cumbersome simulations and empirical measurements of the wind direction. These approaches are oftentimes not satisfying.

EP 2 653 721 A1, which is prior art under Art. 54 (3) EPC, discloses a wind turbine measurement system. The system comprises a measuring device for determining a pressure at a number of pressure measurement points in the front of a rotor plane, an analysis module for generating a control signal on the basis of the pressure measurements, and an output means for issuing the control signal to a controller of the wind turbine.

EP 2 267 301 A1 discloses an arrangement to control the yawing of a wind turbine comprising a nacelle and a hub. The wind-turbine comprises a channel with at least one opening located at a predefined distance to the rotor-plane and which is arranged in a way that at least one component of the incoming wind is guided through the opening and into the channel as an air-flow. The channel comprises a measuring-device, which is arranged to measure a parameter of the air-flow, while it passes through the channel. The measuring-device is connected with a controller, which is arranged to use the measured parameter of the air-flow to detect a yaw-angle-error between the direction of the incoming wind and the rotational axis, while the yaw-angle-error is used to adjust the yaw-angle of the nacelle.

EP 2 017 468 A1 discloses a method for yaw control for a wind turbine comprising a rotor with at least one rotor blade, the rotor defining a rotor axis and a rotor plane to which the rotor axis is perpendicular. According to the method, the rotor axis is turned such as to minimize the yaw angle error between the ambient wind direction and the rotor axis, wherein the turning of the rotor axis is performed based on the measurement of a wind speed in the rotor plane at at least one rotor blade.

EP 2 653 722 A1, which is prior art under Art. 54 (3) EPC, discloses a yaw error detection sensor which is adapted to be mounted to a front side of a hub of a wind turbine of a horizontal axis type. The yaw error detection sensor is adapted to measure a stagnation pressure or/and a wind velocity at two different positions along a horizontal plane of the hub.

It is an object of the invention to provide an improved method for adjusting the yaw angle of a wind turbine relative to a given wind direction.

This object is achieved by the method according to claim 1.

According to the first step of the method, a reference wind pressure information containing at least two reference wind pressure measurement values which reference wind pressure measurement values exhibit a periodic nature related to a rotation of the rotor of the wind turbine is determined. The rotor of the wind turbine comprises a number of rotor blades attached thereto. The rotor blades are usually attached to a rotor hub of the rotor. The at least two reference wind pressure measurement values are preferably taken from in front of the rotor plane. This first step may be performed before the wind turbine is normally operated, i.e. the reference wind pressure information may be obtained before normal operation of the wind turbine. The reference wind pressure information may be stored in a storage means such as a look-up table or the like.

According to the second step of the method, a reference phase offset relative to an angular reference value is determined from the reference wind pressure measurement values contained in the reference wind pressure information. I.e., the reference pressure measurement values are processed in such a manner that a reference phase offset relative to an angular reference value is determined. Processing of the reference pressure measurement values may be performed in a control unit using appropriate processing algorithms such as the Goertzel algorithm which will be explained in more detail below. Generally, the angular reference value may be arbitrarily determined. The reference phase offset may also be stored in a look-up table or the like.

According to the third step of the method, the yaw angle of the wind turbine is adjusted in such a manner that the phase offset of the current pressure measurement values contained in a current pressure measurement information corresponds to the reference phase offset of the reference pressure measurement values contained in the reference pressure information. Adjusting the yaw angle usually involves controlling a yaw drive and may therefore, also be performed in a control unit communicating with the yaw drive. The control unit is adapted to send control commands to a yaw drive controller. This third step may be performed while the wind turbine is normally operated, i.e. the current wind pressure information may be obtained during normal operation of the wind turbine.

The method according to the invention allows for comparatively easily assessing if the orientation/position of the rotor coincides with the wind direction. This also allows for assessing if the rotor is orientated/positioned in the zero wind position in which the longitudinal axis of the nacelle is aligned with the wind direction so that a zero wind calibration of the wind turbine is feasible.

Hence, the method according to the invention may be used to adjust or control the orientation/position of the rotor in such a manner that it always directly faces the wind, thereby optimising energy output and reducing revenue losses, respectively. Likewise, mechanical loading of diverse components of the wind turbine such as particularly bearings may be reduced since uneven loadings being related to yaw errors may be avoided.

The first step of the method, i.e. determining a reference wind pressure information containing at least two reference wind pressure measurement values which reference wind pressure measurement values exhibit a periodic nature related to a rotation of the rotor, is based on the knowledge that the wind pressure usually exhibits a well-defined behaviour, that alterations in wind pressure can be related to the rotation of the rotor, and that the yaw angle or yaw error of the wind turbine has an influence on the measured wind pressure measurement values.

The reference wind pressure measurement values are preferably obtained from a region coinciding with or preceding the rotor plane, i.e. a parallel plane in front of the rotor plane. The rotor plane is the plane in which the rotor blades rotate. The reference wind pressure measurement values may originate from respective pressure sensors provided with the spinner or the rotor, particularly the rotor hub. The pressure sensors are advantageously provided with the wind facing region of the spinner or the rotor hub, respectively. The pressure sensors may comprise pressure transducers, pressure transmitters, etc. Hence, Bourdon gauges, piezo-resistive strain gauges, or the like may be used as pressure sensors.

Thereby, constructions of a spinner or a rotor hub with a cylindrically or conically shaped base body and a flat or essentially flat, i.e. circular or disc-shaped, frontal or windward face is of advantage since the pressure sensors each representing a measurement point can be arranged in the same plane.

The periodic nature of the reference wind pressure measurement values is based on the periodic rotation of the rotor comprising a spinner or a rotor hub being provided with respective pressure sensors.

A reference wind pressure measurement value preferably comprises a pressure differential between two pressure values obtained at different positions of the spinner or the rotor hub. A first pressure value shall be obtained at the centre of the spinner or the rotor hub and a second pressure value shall be obtained at a certain distance from the point where the first pressure value is obtained. With this arrangement of measurement points for taking respective pressure values, the first measurement value or first measurement point remains (essentially) constant during rotation of the spinner or rotor hub, respectively. The second measurement value or second measurement point describes a circular path of travel during rotation of the spinner or rotor hub, respectively. Preferably, the second measurement point is located on the spinner or rotor hub windward surface as far away from the first measurement point as possible, i.e. the second pressure value is taken as far away from the first pressure value as possible. This preferred arrangement of measurement points contributes to an improved accuracy and resolution of the measurement.

Thus, differential pressure sensors taking pressure measurements from at least two different measurement points and outputting the pressure difference between the pressure measurements taken at these measurement points may be implemented. The implementation of such differential pressure sensors is usually more accurate than using two absolute pressure sensors having unavoidable different measurement conditions due to manufacturing tolerances, for instance.

For an essentially flat or vertical spinner or rotor hub windward frontal surface the difference in measured pressures between respective first and second measurement points will remain essentially constant when the spinner or rotor hub, respectively, is facing directly into the wind. This can be visualized as a straight line when the pressure differential is plotted against angle for one full rotation (from 0° through to 360°) of the second measurement point. This may be referred to as the "reference pressure differential" for a flat or vertical spinner or rotor hub front face.

For most wind turbine designs, the nacelle is slightly tilted upward, i.e. the axis of rotation of the rotor is also slightly tilted upward, i.e. by about 6°, for instance, relative to a horizontal plane to provide a safety clearance between the tip of the rotor blades and the tower construction. For such an upward tilted nacelle or rotor, respectively, the difference in measured pressure values between respective first and second measurement points will oscillate slightly if the spinner or rotor hub, respectively, is facing directly into the wind since the pressure in a higher outer region of the spinner or rotor hub windward surface is regularly less than the pressure in a lower outer region of the spinner or rotor hub windward surface. A respective second measurement point passes through these zones of slightly different pressure during rotation of the rotor.

The oscillation in pressure differential can be visualized as one phase of a sine wave when the pressure differential is plotted against angle for one full rotation (from 0° through to 360°) of the second measurement point. This oscillation may be referred to as the "reference oscillation" for an upward tilted nacelle or rotor, respectively. When the wind turbine does not directly face the wind, the pressure zones and thereby, the pressure differential will change.

As a result, the periodic differential pressure is usually laterally offset from the reference oscillation by a phase offset and vertically by a shift of amplitude. The phase offset between this oscillating signal and the reference oscillation will depend primarily on the size or extent of the yaw error.

In order to relate pressure values to the rotation of the rotor, a respective second measurement point may be arranged in the spinner or rotor hub front face so that it is essentially in line with a longitudinal axis of a particular rotor blade. Therefore, whenever that particular rotor blade passes through its highest point the second measurement point has also completed a full revolution.

A position measurement may be used to measure the actual position of the rotor, whereby an identification of the location of the pressure zones is feasible.

The information provided, i.e. particularly the reference wind pressure measurement information which is preferably determined by determining reference wind pressure measurement values for different measurement points arranged in a front plane of the wind turbine with the front plane preceding or coinciding with the rotor plane of the wind turbine before operation of the wind turbine as described above, and the angular reference may be used to determine, i.e. calculate, a reference phase offset relative to an angular reference value.

Thereby, it is preferred that the determination of the reference phase offset from the reference wind pressure measurement values involves applying a discrete Fourier Transformation, preferably a Goertzel algorithm, on the reference wind pressure measurement values. In the same manner, it is preferred that the determination of the current phase offset from the current wind pressure measurement values relative to an angular reference involves applying a discrete Fourier Transformation, preferably a Goertzel algorithm, on the current wind pressure measurement values.

The use of an algorithm such as the Goertzel algorithm is suitable since such an algorithm is capable of determining a phase offset during a single revolution of the spinner. The Goertzel algorithm can process a signal having a single frequency component such as the reference or current wind pressure measurement values determined in the first and third step of the method according to the invention to deliver a complex output comprising the input signal's amplitude and phase. The amplitude can be used to determine the wind speed while the phase can be used to determine the phase offset or yaw error.

The Goertzel algorithm is very efficient in terms of numerical computations, especially since only a single frequency component is considered here. Thus, the application of the Goertzel algorithm is more applicable than the application of other techniques such as Least Mean Square, Recursive Least Square, Fourier transformation etc.

Besides, the Goertzel algorithm is highly robust against amplitude variations and benefits from a well sampled azimuth or angular reference. Therefore, a suitably precise angular reference sensor is used, preferably a sensor with a resolution of at least 10°, preferably less. For example, an angular reference sensor with a resolution of about 1.0° might be used.

The determined reference phase offset or current phase offset can be plotted against measured yaw error with the yaw error being established using the data of the known wind direction and the known angle settings input to the yaw drive. Each phase offset and yaw error value pair corresponds to a point in such a plot. Using established methods for regression or interpolation, a mathematical relationship can be determined between phase offset and yaw error, i.e. phase offset can be expressed as a function of yaw error. This mathematical relationship is static, i.e. it need only be estimated once for a wind turbine or for a specific type of wind turbine, respectively.

According to the invention, the reference pressure measurement values are fitted to build a linear curve, whereby the reference phase offset corresponds to the angle between the horizontal axis and an orthogonal line to the linear curve that goes through the origin of the coordinate system of the plot. Generally, it is possible to determine respective pressure measurement values at different yaw errors. Further, it is possible to determine respective reference pressure measurement values at different wind speeds.

The invention further relates to a wind turbine comprising a nacelle being rotatably mounted on a tower, a yaw drive for rotating the nacelle relative to the tower, a rotor being rotatably mounted to the nacelle with the rotor having a rotor hub being provided with a number of rotor blades and a number of wind pressure measurement sensors adapted to provide wind pressure measurement values which wind pressure measurement values exhibit a periodic nature related to a rotation of the rotor, and a control unit. The control unit is adapted to perform the method as described above. The rotor may comprise a rotor hub. A spinner may be mounted on the rotor hub.

The above and other aspects, features, and further advantages of the present invention will be more clearly understood from the following description taken in conjunction with the accompanying drawings, in which:
- Fig. 1: shows a principle drawing of a wind turbine according to an embodiment of the invention;
- Fig. 2: shows a schematic representation of a plan view of the wind turbine depicted in fig. 1;
- Fig. 3: shows a pressure distribution for a first orientation of the rotor hub of the wind turbine depicted in fig. 1;
- Fig. 4: shows a pressure distribution for a second orientation of the rotor hub of the wind turbine depicted in fig. 1;
- Fig. 5: shows a plot of differential pressure curves for one revolution of the rotor hub orientations of Figs. 3, 4; and
- Fig. 6 - 8: show different plots of the output from a Goertzel algorithm.

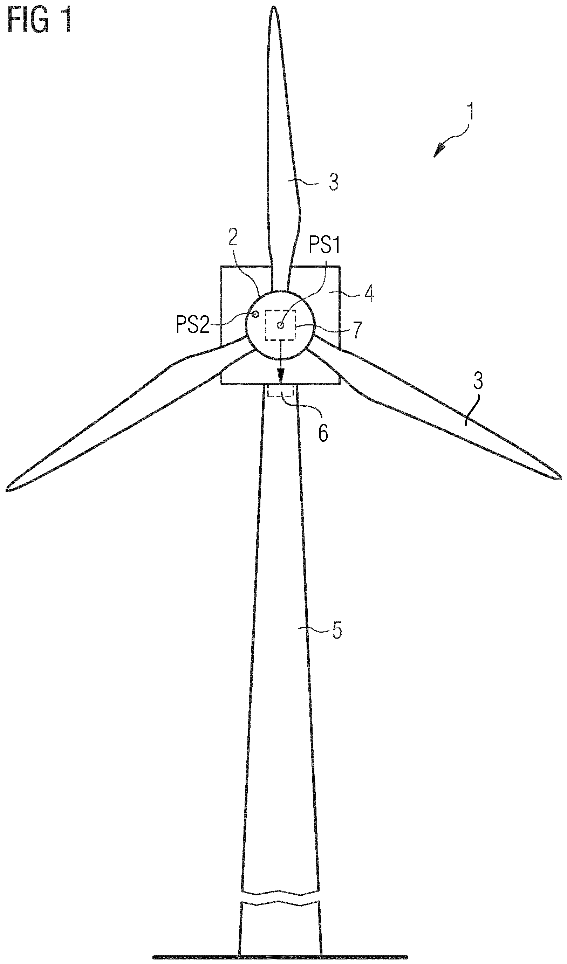

Fig. 1 shows a principle drawing of a wind turbine 1 according to an exemplary embodiment of the invention. The wind turbine 1 comprises a rotor hub 2 being part of a rotor of the wind turbine 1. The rotor hub 2 has a number of rotor blades 3 attached thereto. The rotor hub 2 is mounted to a nacelle 4. The nacelle 4 is rotatably mounted on a tower 5 by a yaw drive 6. The wind turbine 1 further comprises a central control unit 7 which is exemplarily incorporated inside the nacelle 4.

The control unit 7 is adapted to generate a control command in order to actuate the yaw drive 6 so as to adjust the yaw angle α of the wind turbine 1, the rotor hub 2 and the nacelle 3, respectively. An adjustment of the yaw angle α may be necessary to correct the alignment of the rotor hub 2 so that it directly faces into the wind, i.e. is accurately aligned with the wind direction.

A number of pressure sensors PS1, PS2 is provided with the windward surface or front face of the rotor hub 2. An angular reference sensor (not shown) may deliver a trigger signal to the pressure sensors PS1, PS2 at regular angular intervals as the rotor hub 2 rotates. The pressure sensors PS1, PS2 represent pressure measurement points.

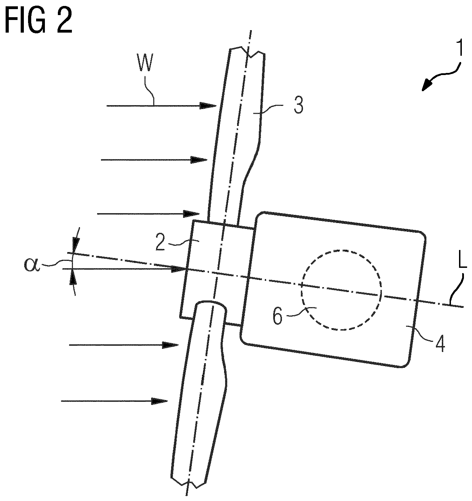

Fig. 2 shows a schematic representation of a plan view of the wind turbine 1 depicted in fig. 1. As mentioned with respect to fig. 1, the nacelle 4 can be rotated by the yaw drive 6 (indicated by the broken line) with the intention of bringing the longitudinal axis L of the nacelle 4 and rotor hub 2 into line with the current wind direction W.

As is discernible, the rotor hub 2 is oriented/positioned in a non-ideal position relative to the wind direction W, i.e. the longitudinal axis L of the nacelle 4 is not in line with the current wind direction W so that the longitudinal axis L of the nacelle 4 does not coincide with the wind direction W. Thus, the rotor hub 2 is oriented/positioned in such a manner that it does not directly face the wind.

The rotor hub 2 is oriented/positioned so that it faces the wind direction W with a certain angular offset which is denoted as yaw error. The offset or yaw error may be derived from the yaw angle α which is higher than zero. The yaw angle α is the angle between the longitudinal axis L and the (current) wind direction W.

Due to the yaw error, the energy output of the wind turbine 1 is lower than it would be if the rotor hub 2 was directly facing the wind in which position/orientation the yaw angle α is zero. This position/orientation of the rotor hub 2 relative to the wind direction W may be denoted as the zero wind direction.

Typically, yaw errors also result in imbalanced loading of diverse components of the wind turbine 1. For instance, bearings of the rotor blades 3 such as pitch bearings or bearings of the main shaft of the generator may be subjected to undesirable fatigue loading.

The method according to the invention allows adjusting the yaw angle α of the wind turbine 1 or the rotor hub 2, respectively, in such a manner that the rotor hub 2 directly faces or coincides with the wind direction W.

The method according to the invention comprises the steps of:
- determining a reference wind pressure information containing at least two reference wind pressure measurement values which reference wind pressure measurement values exhibit a periodic nature related to a rotation of the rotor or rotor hub 2, respectively;
- determining a reference phase offset relative to an angular reference value from the reference wind pressure measurement values contained in the reference wind pressure information; and
- adjusting the yaw angle α of the rotor hub 2 in such a manner that the phase offset of the current pressure measurement values contained in a current pressure measurement information corresponds to the reference phase offset of the reference pressure measurement values contained in the reference pressure information.

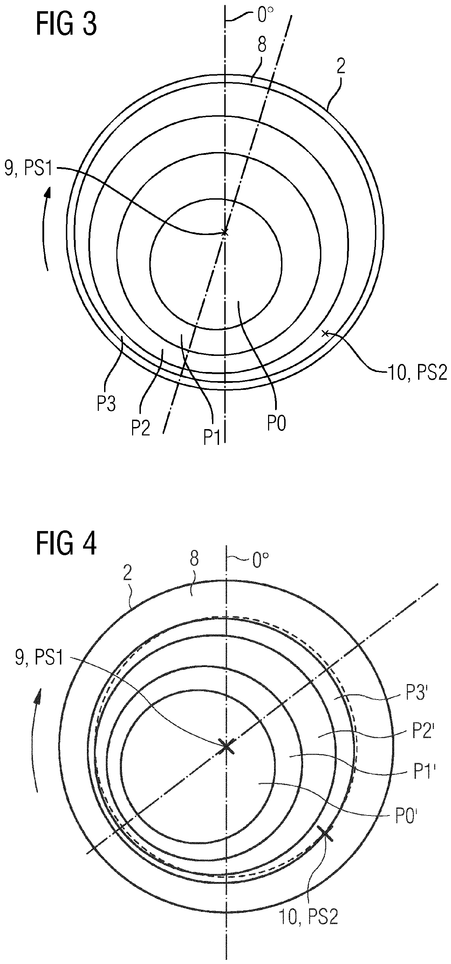

The determination of a respective reference wind pressure information and the determination of a reference phase offset relative to an angular reference value will be explained with respect to fig. 3 - 5.

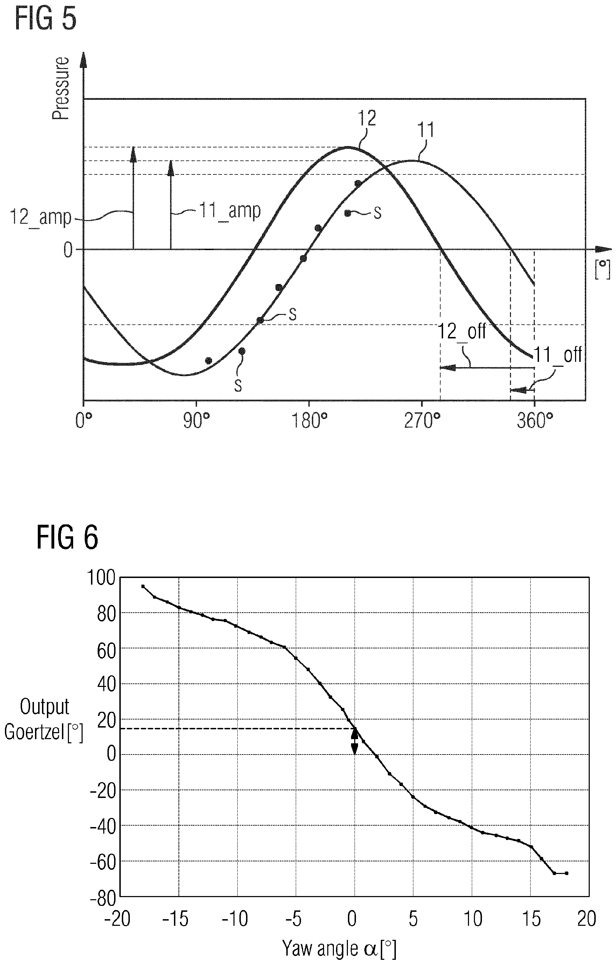

Fig. 3 shows a pressure distribution for a first orientation of the rotor hub 2 of the wind turbine 1 depicted in fig. 1. Fig. 4 shows a pressure distribution for a second orientation of the rotor hub 2 of the wind turbine 1 depicted in fig. 1, and Fig. 5 shows a plot of differential pressure curves for one revolution of the rotor hub orientations according to Figs. 3, 4.

In Fig. 3, it is assumed that the rotor hub 2 is essentially circular in shape with the rotor hub 2 having an essentially circular front face 8. The rotor hub 2 is tilted upward relative to a vertical axis by a small angle of about 6°, for instance.

In Fig. 3, the rotor hub 2 is directly facing the wind. The pressure distribution over the front face 8 is such that a highest pressure is given in a first pressure zone P0 slightly offset from the geometric centre (indicated by an "x") of the front face 8. The pressure decreases with increasing distance from the region of highest pressure zone P0.

The decrease of pressure is indicated by discrete pressure zones P1, P2, P3 each indicating a region of decreasing pressure. The pressure zone P3 being at the outermost edge of the rotor hub 2 exhibits the lowest pressure. Of course, the pressure does not decrease stepwise over discrete pressure zones P0, P1, P2, P3, but decreases smoothly from the highest pressure at the centre of the front face 8 to the lowest pressure at the outer perimeter of the front face 8.

The pressure distribution remains the same while the rotor hub 2 rotates (indicated by the arrow). Thereby, a first point 9 essentially remains within the first pressure zone P0, while a second point 10 moves along a circular path of travel (indicated by the dotted line) that takes it through outer pressure zones P2, P3. Thus, while the pressure at the first point 9 remains essentially constant, the pressure at the second point 10 increases and decreases in a cyclic or periodic manner as the rotor hub 2 rotates and the second point 10 passes in and out of the pressure zones P2, P3 on its circular path of travel from 0° at its azimuth or highest point on the front face 8 through 180° at its lowest point on the front face 8.

The pressure zones are not necessarily symmetrical around a vertical axis. The maximum pressure zone may be shifted or offset by a certain angle from the vertical axis.

Fig. 4 shows a situation in which the rotor hub 2 does not directly face the wind. Instead, the rotor hub 2 faces the wind with a certain angular offset or yaw error. The effect of the yaw error is that the pressure zones are now arranged differently over the front face 8. Instead, the pressure zones P0' P1', P2', P3' are "offset" and may be distorted. As a result, the second point 10 now passes in and out of several pressure zones P1', P2', P3'.

In this yaw error position the size of the delta pressure will be different compared to the situation shown in fig. 3, i.e. the pressure zones P1', P2', P3' will be different from pressure zones P1, P2, and P3. However, the highest and lowest pressure points are still diametrically opposed about the first point 9, which is indicated by the straight slanted broken line passing through these points.

As mentioned with respect to fig. 1, the rotor hub 2 comprises two pressure measurement points represented by the pressure sensors PS1, PS2. A first pressure sensor PS1 is located essentially in the geometric centre of the front face 8 of the rotor hub 2 (cf. first point 9). A second pressure sensor PS2 is located close to an outer edge of the front face 8 of the rotor hub 2 (cf. point 10). Since the pressure sensors PS1, PS2 are located in the front face 8 of the rotor hub 2, they are in front of a rotor plane P_{R} in which the rotor blades 3 rotate.

As described above with the aid of figs. 3 and 4, essentially unchanging or stagnation pressure will be experienced at the first pressure sensor PS1 as the rotor hub 2 rotates. In contrast, the second pressure sensor PS2 will experience a cyclically changing pressure as it repeatedly passes through regions of higher and lower pressure.

A differential pressure sensor (not shown) may be arranged in a cavity behind the front face 8 of the rotor hub 2. The differential pressure sensor may output a differential pressure value indicating the difference in pressure values derived by the pressure sensors PS1, PS2. Further, a yaw error value and a wind speed value may be determined on basis of the output of the differential pressure sensor.

Fig. 5 shows two graphs of differential pressure curves 11, 12 for a single revolution of rotor hub 2 from 0° to 360°. Graph 11 corresponds to a first yaw error, i.e. a first yaw angle α > 0°, graph 12 corresponds to a second yaw error, i.e. a second yaw angle α > 0°. The first and second yaw errors are different so that the first and second yaw angles α are different as well. Graph 11 is characterised by a periodic nature, i.e. a sinusoidal oscillation of differential pressure with an offset 11_off and amplitude 11_amp. Graph 12 is also characterised by a periodic nature, i.e. a sinusoidal oscillation of differential pressure with an offset 12_off and amplitude 12_amp.

Measurements S may be derived from the pressure values obtained by the pressure sensors PS1, PS2. The pressure values may be obtained at regular intervals, for example every 10°, 20°, 30° etc. as indicated by the exemplary measurements S arranged along graph 11. Of course, the same applies to graph 12.

A Goertzel algorithm may be applied on these measurements S, i.e. the measurements S and an angular reference value may be input to the Goertzel algorithm to determine or output a (reference or current) phase offset and amplitude. In other words, a (reference or current) phase offset relative to an angular reference value is determined from (reference or current) wind pressure measurement values contained in a (reference or current) wind pressure information.

Fig. 6 - 8 each shows a plot of outputs from a Goertzel algorithm. Fig. 6 shows a plot of the phase output (y-axis) from a Goertzel algorithm versus yaw angle α (x-axis). The angular reference value is 0°. The phase offset is the value of the phase output of the Goertzel algorithm at a yaw angle α of 0°. Hence, the phase offset is ca. 18° in fig. 6.

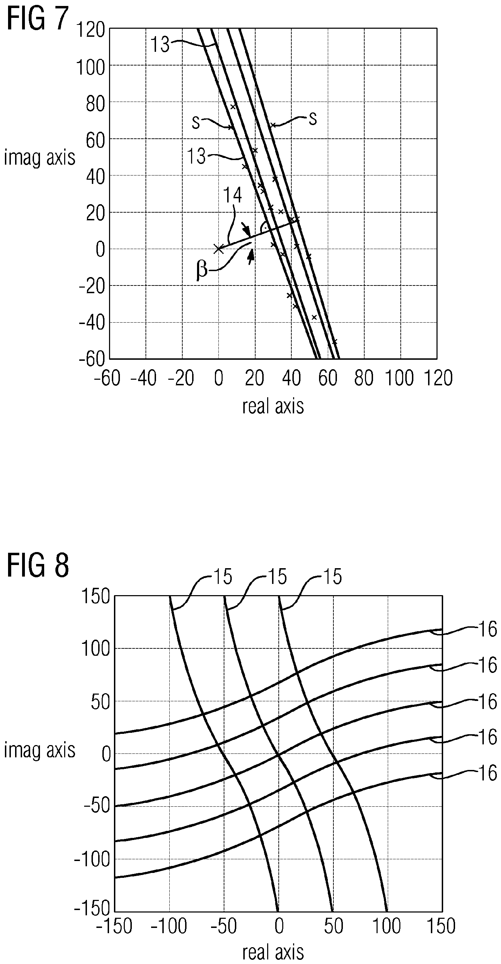

Fig. 7 shows a plot of the output from the Goertzel algorithm in the complex plane for measurements conducted at different yaw errors and different wind speeds. The angular reference value is still 0°, i.e. the angular reference value is the point having the x-, y-coordinates 0, 0 (origin). The measurements S are fitted to a linear fit i.e. to build a linear curve 13. Each line in fig. 7 represents fitted results from measurements conducted at different wind speeds. The phase offset corresponds to the angle between the straight line 14 extending between the angular reference value and the fitted linear curve 13. The straight line 14 perpendicularly intersects the linear curve 13 in an angle of 90°. The angle β between the straight line 14 extending between the angular reference value and the fitted linear curve 13 is also ca. 18° and hence, accords to the phase offset as depicted in fig. 6. This determined phase offset may be used as a reference phase offset.

It should be noted that the phase offset will be different for each wind turbine variant, and therefore needs to be determined either for each individual wind turbine or for each individual wind turbine variant.

This reference phase offset is used to adjust the current yaw angle α of the wind turbine 1 in such a manner that the phase offset derived from respective currently determined pressure measurement values of measurements S corresponds to the reference phase offset.

Fig. 7 also shows that the phase offset is essentially independent from wind speed since the angle β between the straight line 14 extending between the angular reference value and all fitted linear curves 13 each indicating a certain wind speed is always the same.

Fig. 8 shows another plot of the output from the Goertzel algorithm in the complex plane. The curve is based on the two assumptions. First, it is assumed that when the rotor hub 2 is directly facing the wind, i.e. the yaw error is zero and the tilt angle is zero, the output from the Goertzel algorithm is also zero (no amplitude on signal). Second, it is assumed that a change in the tilt angle of the nacelle, rotor and rotor hub 2 relative to a vertical axis and a change in the yaw angle α will result in a perpendicular change in the output - at least when the change is small and absolute values close to zero.

The assumptions are illustrated in fig. 8. The essentially vertically extending curve 15 indicating a 0° tilt angle of the rotor hub 2 and the essentially horizontally extending curve 16 perpendicularly intersect each other at point 0, 0 (origin). Curves 15 for different tilt angles extend in parallel. Curves 16 for different yaw angles α also extend in parallel.

Although the present invention has been described in detail with reference to the preferred embodiment, the present invention is not limited by the disclosed examples from which the skilled person is able to derive other variations without departing from the scope of the invention.

## Claims

1. Method for adjusting the yaw angle of a wind turbine (1) relative to a given wind direction, comprising the steps of:
- determining a reference wind pressure information containing at least two reference wind pressure measurement values which reference wind pressure measurement values exhibit a periodic nature related to a rotation of the rotor of the wind turbine (1);
- determining a reference phase offset relative to an angular reference value from the reference wind pressure measurement values contained in the reference wind pressure information; and
- adjusting the yaw angle (α) of the rotor in such a manner that the phase offset of the current pressure measurement values contained in a current pressure measurement information corresponds to the reference phase offset of the reference pressure measurement values contained in the reference pressure information, **characterized in that** the reference pressure measurement values are fitted to build a linear curve, whereby the reference phase offset corresponds to the angle between a horizontal axis and a orthogonal line to the linear curve that goes through the origin of the coordinate system of the plot.

2. Method according to claim 1, wherein at least the reference wind pressure information is determined by determining reference wind pressure measurement values for different measurement points arranged in a front plane of the wind turbine (1) with the front plane preceding or coinciding with the rotor plane of the wind turbine (1) before operation of the wind turbine (1).

3. Method according to claim 2, wherein a reference wind pressure measurement value comprises a pressure differential between a first pressure value measured at a first measurement point (9) arranged at the centre of the rotor and a second pressure value measured at a second measurement point (10) arranged with a certain distance to the first measurement point (9).

4. Method according to one of the preceding claims, wherein determining the reference phase offset from the reference wind pressure measurement values and the current phase offset from the current wind pressure measurement values relative to an angular reference involves applying a discrete Fourier Transformation, particularly a Goertzel algorithm, on the reference wind pressure measurement values and the current wind pressure measurement values.

5. Method according to one of the preceding claims, wherein respective reference pressure measurement values are determined at different yaw errors.

6. Method according to one of the preceding claims, wherein respective reference pressure measurement values are determined at different wind speeds.

7. Wind turbine (1), comprising a nacelle (4) being rotatably mounted on a tower (5), a yaw drive (6) for rotating the nacelle (4) relative to the tower (5), a rotor having a rotor hub (2) being rotatably mounted to the nacelle (4) with the rotor hub (2) being provided with a number of rotor blades (3) and a number of wind pressure measurement sensors (PS1, PS2) adapted to provide wind pressure measurement values which wind pressure measurement values exhibit a periodic nature related to a rotation of the rotor, and a control unit (7) adapted to perform the method according to one of the preceding claims.

## Patentansprüche

1. Verfahren zum Einstellen des Gierwinkels einer Windenergieanlage (1) in Bezug auf eine gegebene Windrichtung, welches die Schritte umfasst:
- Bestimmen einer Referenz-Winddruckinformation, die wenigstens zwei Referenz-Winddruckmesswerte enthält, wobei diese Referenz-Winddruckmesswerte eine periodische Natur aufweisen, die mit einer Rotation des Rotors der Windenergieanlage (1) zusammenhängt;
- Bestimmen einer Referenz-Phasenverschiebung in Bezug auf einen Winkelreferenzwert aus den in der Referenz-Winddruckinformation enthaltenen Referenz-Winddruckmesswerten; und
- Einstellen des Gierwinkels (α) des Rotors auf eine solche Weise, dass die Phasenverschiebung der aktuellen Druckmesswerte, die in einer aktuellen Druckmessinformation enthalten sind, der Referenz-Phasenverschiebung der in der Referenz-Druckinformation enthaltenen Referenz-Druckmesswerte entspricht,
**dadurch gekennzeichnet, dass** die Referenz-Druckmesswerte angepasst werden, um eine lineare Kurve zu bestimmen, wobei die Referenz-Phasenverschiebung dem Winkel zwischen einer horizontalen Achse und einer zu der linearen Kurve orthogonalen Linie, welche durch den Ursprung des Koordinatensystems der Grafik verläuft, entspricht.

2. Verfahren nach Anspruch 1, wobei wenigstens die Referenz-Winddruckinformation bestimmt wird, indem Referenz-Winddruckmesswerte für verschiedene Messpunkte bestimmt werden, die in einer vorderen Ebene der Windenergieanlage (1) angeordnet sind, wobei die vordere Ebene vor der Rotorebene der Windenergieanlage (1) vor dem Betrieb der Windenergieanlage (1) verläuft oder mit ihr zusammenfällt.

3. Verfahren nach Anspruch 2, wobei ein Referenz-Winddruckmesswert eine Druckdifferenz zwischen einem ersten Druckwert, der an einem am Mittelpunkt des Rotors angeordneten ersten Messpunkt (9) gemessen wird, und einem zweiten Druckwert, der an einem in einem gewissen Abstand von dem ersten Messpunkt (9) angeordneten zweiten Messpunkt (10) gemessen wird, umfasst.

4. Verfahren nach einem der vorhergehenden Ansprüche, wobei das Bestimmen der Referenz-Phasenverschiebung aus den Referenz-Winddruckmesswerten und der aktuellen Phasenverschiebung aus den aktuellen Winddruckmesswerten in Bezug auf eine Winkelreferenz das Anwenden einer diskreten Fourier-Transformation, insbesondere eines Goertzel-Algorithmus, auf die Referenz-Winddruckmesswerte und die aktuellen Winddruckmesswerte beinhaltet.

5. Verfahren nach einem der vorhergehenden Ansprüche, wobei jeweilige Referenz-Druckmesswerte bei verschiedenen Gierfehlern bestimmt werden.

6. Verfahren nach einem der vorhergehenden Ansprüche, wobei jeweilige Referenz-Druckmesswerte bei verschiedenen Windgeschwindigkeiten bestimmt werden.

7. Windenergieanlage (1), welche umfasst: eine Gondel (4), die auf einem Turm (5) drehbar gelagert ist, einen Gierantrieb (6) zum Drehen der Gondel (4) in Bezug auf den Turm (5), einen Rotor mit einer Rotornabe (2), der an der Gondel (4) drehbar gelagert ist, wobei die Rotornabe (2) mit einer Anzahl von Rotorblättern (3) und einer Anzahl von Winddruck-Messsensoren (PS1, PS2), die dafür ausgelegt sind, Winddruckmesswerte bereitzustellen, versehen ist, wobei diese Winddruckmesswerte eine periodische Natur aufweisen, die mit einer Rotation des Rotors zusammenhängt, und eine Steuereinheit (7), die dafür ausgelegt ist, das Verfahren nach einem der vorhergehenden Ansprüche durchzuführen.

## Revendications

1. Procédé de réglage de l'angle de lacet d'une éolienne (1) par rapport à une direction de vent donnée, comprenant les étapes consistant à :
- déterminer des informations de pression de vent de référence contenant au moins deux valeurs de mesure de pression de vent de référence, ces valeurs de mesure de pression de vent de référence affichent une nature périodique liée à une rotation du rotor de l'éolienne (1) ;
- déterminer un décalage de phase de référence par rapport à une valeur de référence angulaire à partir des valeurs de mesure de pression de vent de référence contenues dans les informations de pression de vent de référence ; et
- régler l'angle de lacet (α) du rotor de telle manière que le décalage de phase des valeurs de mesure de pression actuelles contenues dans des informations de mesure de pression actuelles corresponde au décalage de phase de référence des valeurs de mesure de pression de référence contenues dans les informations de pression de référence,
**caractérisé en ce que**
les valeurs de mesure de pression de référence sont ajustées pour former une courbe linéaire, de ce fait le décalage de phase de référence correspond à l'angle entre un axe horizontal et une ligne orthogonale à la courbe linéaire qui passe par l'origine du système de coordonnées de la représentation graphique.

2. Procédé selon la revendication 1, dans lequel au moins les informations de pression de vent de référence sont déterminées par la détermination des valeurs de mesure de pression de vent de référence pour différents points de mesure disposés sur un plan avant de l'éolienne (1) dont le plan avant précède ou coïncide avec le plan de rotor de l'éolienne (1) avant le fonctionnement de l'éolienne (1).

3. Procédé selon la revendication 2, dans lequel une valeur de mesure de pression de vent de référence comprend un différentiel de pression entre une première valeur de pression mesurée à un premier point de mesure (9) disposé au centre du rotor et une seconde valeur de pression mesurée à un second point de mesure (10) disposé à une certaine distance du premier point de mesure (9).

4. Procédé selon l'une des revendications précédentes, dans lequel déterminer le décalage de phase de référence à partir des valeurs de mesure de pression de vent de référence et le décalage de phase actuel à partir des valeurs de mesure de pression de vent actuelles par rapport à une référence angulaire consiste à appliquer une transformation discrète de Fourier, en particulier un algorithme de Goertzel, sur les valeurs de mesure de pression de vent de référence et les valeurs de mesure de pression de vent actuelles.

5. Procédé selon l'une des revendications précédentes, dans lequel les valeurs de mesure de pression de référence respectives sont déterminées au niveau de différentes erreurs de lacet.

6. Procédé selon l'une des revendications précédentes, dans lequel des valeurs de mesure de pression de référence respectives sont déterminées à différentes vitesses de vent.

7. Éolienne (2), comprenant une nacelle (4) qui peut être montée de manière rotative sur une tour (5), un entraînement de lacet (6) permettant de faire tourner la nacelle (4) par rapport à la tour (5), un rotor ayant un moyeu de rotor (2) qui est monté de manière rotative sur la nacelle (4) avec le moyeu de rotor (2) qui est pourvu d'un certain nombre de pales de rotor (3) et d'un certain nombre de capteurs de mesure de pression du vent (PS1, PS2) adaptés pour fournir des valeurs de mesure de pression du vent dont les valeurs de mesure de pression du vent affichent une nature périodique liée à une rotation du rotor, et une unité de commande (7) adaptée pour mettre en oeuvre le procédé selon l'une des revendications précédentes.
